# EUROPÄISCHE PATENTANMELDUNG

(11) **EP 1 087 151 A2**
(43) Veröffentlichungstag der Anmeldung: **28.03.2001**
(21) Anmeldenummer: 99120646.7
(22) Anmeldetag: 18.10.1999
(51) Int. Cl.: F16B 37/04

(54) **Befestigungssystem, insbesondere für Rohre oder dergleichen**

(30) Priorität: 22.09.1999 DE 19945306
(71) Anmelder: R. Frank GmbH, 74653 Künzelsau-Morsbach/Württ. (DE)
(72) Erfinder: Baisch, Rolf, 74653 Ingelfingen-Criesbach (DE)
(74) Vertreter: Ilberg, Roland W., Dipl.-Ing.

(57) **Zusammenfassung**

Die Erfindung betifft ein Befestigungssystem für insbesondere Rohre oder dergleichen an einer Decke oder Wand mit einem Halter und einem Gewindebolzen, auf dessen freies Ende eine Schiebemutter aufdrehbar ist, die in eine C-förmige Tragschiene einführbar ist und mittels einer Spannmutter, einer Unterlegscheibe sowie einem federnden Element unter Vorspannung an der geschlitzten Wandung der Tragschiene festgelegt werden kann. Erfindungsgemäß ist:
der Gewindebolzen (6) unlösbar mit dem Befestigungselement (1) verbunden.

## Beschreibung

Die Erfindung betrifft ein Befestigungssystem für insbesondere Rohre oder dergleichen an einer Decke oder Wand mit einem Halter und einem Gewindebolzen, auf dessen freies Ende eine Schiebemutter aufdrehbar ist, die in eine C-förmige Tragschiene einführbar ist und mittels einer Spannmutter, einer Unterlegscheibe sowie einem federnden Element unter Vorspannung an der geschlitzten Wandung der Tragschiene verspannt werden kann.

Aus der DE 41 28 157 C1 ist bereits ein Befestigungselement für Rohr-, Schlauch- und Kabelschellen auf Tragschienen mit C-förmigem Querschnitt bekannt, deren Verankerungseinheit ein Führungsnippel mit Innengewinde aufweist, auf welchem eine Befestigungsplatte sowie eine Tragplatte axial relativ zueinander verstellbar angeordnet sind. Während die Tragplatte auf dem Führungsnippel frei drehbar sitzt, ist die Befestigungsplatte mit dem Führungsnippel drehfest verbunden. Dabei wird die Tragplatte durch Vorspannung einer Druckfeder in Richtung zur Befestigungsplatte gepreßt. Zur Montage wird die Befestigungsplatte quer zur Tragplatte eingestellt und in die Schienenöffnung der Tragschiene eingeführt. Durch Druckbeaufschlagung und Verdrehen des Führungsnippels kann nun auch die Befestigungsplatte in ihre Befestigslage quer gedreht werden. Nach Aufheben des auf den Führungsnippel ausgeübten Druckes wird die Verankerungseinheit durch die Druckfeder gegen die Schienenöffnung gepreßt und klemmend in der eingestellten Lage gehalten. Die Druckfeder stützt sich dabei zwischen der Tragplatte und dem verbreiterten oberen Ende des Führungsnippels ab. Nach Lösen der Klemmverbindung durch Druck auf den Nippelkopf läßt sich die Verankerungseinheit in Längsrichtung der Tragschiene justieren. In analoger Weise kann die Verankerungseinheit auch von der Tragschiene gelöst und entnommen werden. Die Verankerungseinheit bildet eine selbständige Einheit, die an jeder beliebigen Stelle der Tragschiene leicht und sicher senkrecht oder auch überkopf befestigt werden kann. Danach kann ein Rohrschellenbolzen oder dergleichen in das Innengewinde des Führungsnippels eingeschraubt werden. Ein nachträgliches Festziehen der Verankerungseinheit ist nicht möglich. Auch erfordert die spezielle Form des Führungsnippels einen nicht unerheblichen Aufwand bei der Fertigung. Der Montageprozeß muß in mehreren Schritten und zweihändig erfolgen.

Aus dem Gesamtkatalog der Fa. K. Fassbind-Ludwig + Co. AG, CH-8646 Wagen bei Jona, Neuauflage 1. Novvember 1993, S. 28, ist ein Federspannsatz für eine Verankerungseinheit in einer Tragschiene bekannt, die aus einer Druckfeder, die zwischen einer topfförmigen Distanzscheibe und einer Spannmutter mit Unterlegscheibe angeordnet ist, bekannt. Der Federspannsatz dieser Verankerungseinheit preßt ein Stützteil, beispielsweise einen Hammerkopf einer Hammerkopfschraube oder eine Gleitmutter, und die Distanzscheibe, die beiderseits an den Haltevorsprüngen der Montageschiene anliegen, derart federelastisch in Richtung zueinander, daß die Verankerungseinheit in ihrer Vormontagestellung sicher, aber dennoch verschieblich an der Montageschiene gehalten ist. Unter Verdrehen der Spannmutter verspannt sich die Schraubenfeder unter gleichzeitiger Verkürzung ihrer Länge derart, bis sie völlig von der Distanzscheibe aufgenommen wird. Dadurch läßt sich die Verankerungseinheit zwar festziehen, allerdings geht dabei die Elastizität der Verbindung verloren. Außerdem ist die Herstellung einer Distanzscheibe kostenaufwendig. Auf das auskragende freie Bolzenende der Verankerungseinheit ist nachträglich eine Rohrschelle oder dergleichen Befestigungselement aufschraubbar.

Eine weitere solche Anordnung ist in der DE 295 13 990 U1 beschrieben, wobei die topfförmige Distanzscheibe und die Spannmutter des Federspannsatzes gemäß dem oben genannten Gesamtkatalog zu einem einzigen Teil in Form einer speziellen für die Schraubenfeder ausgesparten Spannmutter zusammengefaßt sind.

In der DE 196 52 027 ist eine Verankerungseinheit für Tragschienen beschrieben, wobei ein sich außenseitig zwischen der Tragschiene und einem Spannelement abstützendes elastisches Zwischenelement vorgesehen ist. Das Zwischenelement ist scheiben- oder plattenförmig mit einem Durchtrittsloch für den Gewindeschaft oder Gewindestab sowie mit wenigstens einem aus der Scheiben- oder Plattenebene vorspringenden, elastisch in die Scheiben- oder Plattenebene einfederbaren Federglied ausgebildet. Dieses elstische Zwischenelement zeichnet sich durch eine vergleichsweise geringe Bauhöhe aus, verliert aber bei vollständig in die Scheiben- oder Plattenebene eingefederten Federgliedern jede Federwirkung bezüglich der Verbindung zwischen Tragschiene und Rohrschelle.

Aus der DE 84 06 072 U1 ist es schließlich bekannt, den Schellenbügel einer Rohrschelle mittels eines Spannbolzens, der den Schellenbügel, eine Ringscheibe, einen Dämpferkörper, eine Ausnehmung in einem starren Befestigungsteil, einen zweiten Dämpferkörper und eine zweite Ringscheibe durchdringt, unter Vorspannen der Dämpferkörper am Befestigungsteil schalldämpfend zu befestigen. Eine Befestigung in einer C-förmigen Tragschiene kann so allerdings nicht bewerkstelligt werden.

Der Erfindung liegt die Aufgabe zugrunde, ein Befestigungssystem für insbesondere Rohre und dergleichen an einer Decke oder Wand mit einem Gewindebolzen, auf dessen freies Ende eine Schiebemutter aufdrehbar ist, die in eine C-förmige Tragschiene einführbar ist und mittels einer Spannmutter, einer Unterlegscheibe sowie einem federnden Element unter Vorspannung an der geschlitzten Wandung der Tragschiene verspannt werden kann, so zu verbessern, daß die Montage der Rohrschellen und dergleichen Befestigungsmittel noch einfacher und schneller als bisher erfolgen kann. Die Befestigung soll unter maximalen Sicherheitsaspekten erfolgen, das heißt einhändig. Außerdem soll eine wirksame und zuverlässige - das heißt bedienungsunabhängige - Schalldämmung und Vibrationsreduzierung zwischen einem zu haltenden Rohr oder dergleichen und der Befestigungswand erreicht werden. Letztlich soll weitestgehend auf Normteile unter Verzicht auf kostentreibende Bauteile zurückgegriffen werden.

Die Aufgabe wird erfindungsgemäß durch im Schutzanspruch 1 angegebenen Merkmale gelöst. Vorteilhafte Weiterbildungen zeigen die begleitenden Ansprüche auf.

Mit der Erfindung wird erstmalig eine komplette und ohne weitere Manipulationen sofort einsetzbare Montageeinheit verwirklicht, die eine Rohrschelle oder dergleichen Befestigungselement und die Verankerungseinheit für alle bekannten Befestigungsschienen und Konsolen umfaßt, wobei die Verankerungseinheit zwischen zwei Unterlegscheiben mit einem speziellen Gummiteil ausgerüstet ist, das neben dem bekannten Effekt der Vorfixierung in der Tragschiene für eine zusätzliche Schalldämmung und Vibrationsreduzierung unabhängig von der ausgeübten Verspannkraft sorgt. Da das Gummiteil als federelastisches Bauelement nicht wie beim vorbekannten Stand der Technik vermittels einer Spannmutter soweit zusammendedrückt werden kann, bis das Federelement in einer Aufnahme oder einer Freisparung des Federelementes selbst verschwindet und demzufolge keine Federkraft mehr übertragen kann, bleibt auch bei unsachgemäßer Handhabung immer eine genügend großer Federweg und damit die erwünschte Dämpfung erhalten.

Das Gummiteil sorgt dafür, daß sich dieses bei entsprechendem Druck durch die Unterlegscheiben zusammendrückt und bei einer Vierteldrehung im Uhrzeigersinn und Loslassen das Befestigungselement in waag- oder senkrecht angebrachten Tragschienen sofort hält und bei Bedarf die Verbindung nur noch angezogen werden muß, beispielsweise mit einem Schraubenschlüssel an der Spannmutter, mit einer Flügelmutter oder mittels Durchschraubung des Gewindebolzens durch die Schiebemutter. Da das Gummiteil unabhängig von der vorbeaufschlagten oder nachträglich eingestellten Spannkraft immer zwischen den zu entkoppelnden Bauteilen verbleibt und zusätzlich so geformt und aus einem solchen Material gefertigt ist, daß seine Federeigenschaften erhalten bleiben, kann es nicht vorkommen, daß die Montageeinheit ungefedert in der Tragschiene befestigt ist. Es wird also in jedem Fall immer eine schall- und vibrationsgedämpfte Halterung erreicht.

Sofern der Druck auf die Unterlegscheiben und damit auf das Gummiteil entsprechend erhöht wird und die Montageeinheit erst dann in die Tragschiene gedrückt und mit einer Vierteldrehung nach rechts arretiert wird, reicht der Anpressdruck aus, verursacht durch das stark zusammengedrückte Gummiteil, damit das Befestigungselement montagefertig installiert ist. Durch die spezielle Eigenschaft des Gummiteils, sich nach dem Lösen der Verbindung wieder in die ursprüngliche Form zurückzudehenen, kann dieses Teil immer wieder eingesetzt werden.

Der Anwender muß im Vergleich zum Stand der Technik nur noch einen Bruchteil an Zeit aufwenden, um Rohrschellen oder dergleichen Befestigungselemente in Tragschienen zu montieren, da die Montageeinheit bereits komplett vorgefertigt und voreingestelt bereitsteht. Insbesondere an schlecht zugänglichen Stellen bzw. wenn kopfüber gearbeitet werden muß oder wenn auf Leitern stehend gearbeitet wird, werden die Vorteile schnell sichtbar, da eine einhändige Montage ohne weiteres möglich wird.

Die Erfindung soll anhand eines Ausführungsbeispiels näher erläutert werden. In der zugehörigen Zeichnung zeigt
Fig. 1: Eine Montageeinheit für Rohre mit einer auf einem Gewindebolzen drehbeweglichen Schiebemutter und
Fig. 2: Eine Montageeinheit für Rohre mit einer auf einem Gewindebolzen verstemmten Schiebemutter.

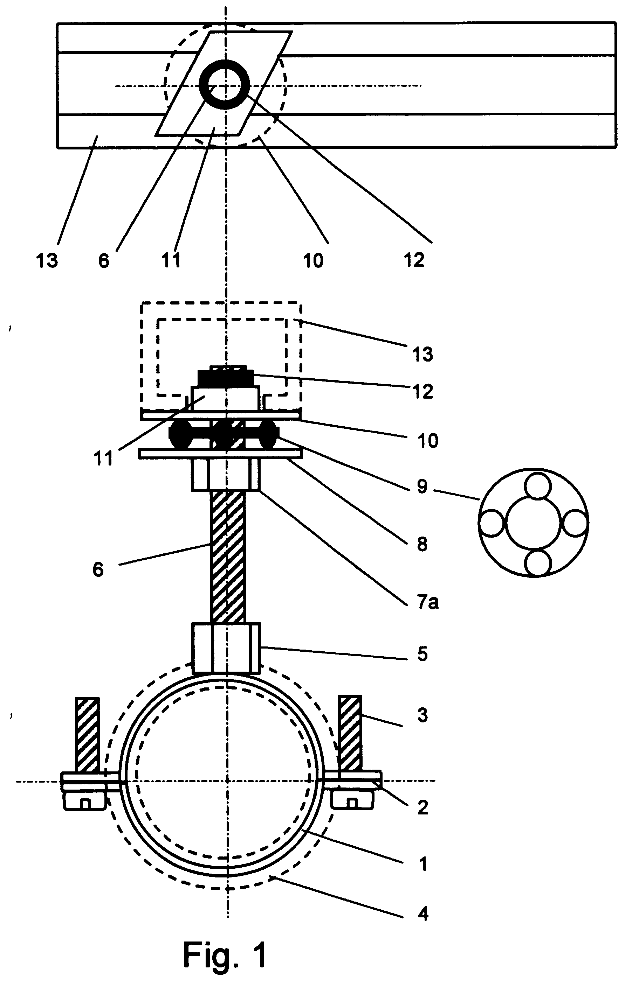

Die Montageeinheit gemäß Fig. 1 besteht zunächst aus einer Rohrschelle 1, die beispielsweise aus zwei halbkreisförmigen Blechbändern mit abgebogenen Befestigungsflanschen 2 zusammengesetzt und mittels Klemmschrauben 3 verbindbar ist sowie gegebenenfalls mit einer schall- und vibrationsdämpfenden Gummieinlage 4 versehen sein kann. Auf der Befestigungsseite ist eine Befestigungsmutter 5 an die entsprechende Schellenbandhälte angeschweißt. Es soll erwähnt sein, daß die Art und Ausführung der Rohrschelle 1 für die Erfindung weitestgehend nebensächlich ist, so könnte es sich ebenso um eine einteilige Rohrschelle oder um eine Scharnierrohrschelle handeln und sie kann mit oder ohne Gummieinlage ausgeführt sein. Auch sind Rohrschellen als Befestigungselement nur beispielhaft angeführt, da sich die Montageeinheit für vielerlei Anwendungen eignet.

In die Befestigungsmutter 5 ist ein Gewindebolzen 6 gedreht und mit der Befestigungsmutter 5 drehfest verbunden. Damit sind die Rohrschelle 1, die Befestigungsmutter 5 und der Gewindebolzen 6 zueinander drehfest befestigt. Auf das freie Ende des Gewindebolzens 6 sind nacheinander eine Spannmutter 7a, eine erste Unterlegscheibe 8, ein ringartiges gummielastisches Teil 9, eine zweite Unterlegscheibe 10, eine drehbewegliche rautenförmige Schiebemutter 11 und ein Gummiring 12 aufgeschraubt bzw. aufgesteckt. Die Schiebemutter 11 hat vorzugsweise eine Breite, die es zuläßt, sie durch den Schlitz einer C-förmigen Tragschiene in dieselbe einzuführen.

Alle Teile sind als eine einzige komplette Montageeinheit vormontiert. Das gummieleastische Teil 9 beabstandet die beiden Unterlegscheiben 8, 10 im vormontierten Zustand vorzugsweise dermaßen, daß bei einer Druckausübung der Montageeinheit mit der Unterlegscheibe 10 gegen die offene Tragschienenwand, wobei der Druck einhändig über die Rohrschelle 1 und die mit ihr verbundene Verankerungseinheit aufgebracht wird, die Schiebemutter 11 hinter die geschlitzte Wand der Tragschiene 13 zu liegen kommt und mit einer Vierteldrehung der Montageeinheit im Uhrzeigersinn sich dahinter fängt und so die Montageeinheit festlegt. Dieser Zustand ist in Fig. 1 oben versinnbildlicht. Der Gummiring 12 hat einen etwas kleineren Durchmesser als der des Gewindebolzens 6, weshalb er beim Verdrehen der Rohrschelle 1 mitsamt dem Gewindebolzen 6 als 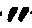 Mitnehmer" für die Schiebemutter 11 wirkt.

Es kann ein Abstand der beiden Unterlegscheiben 8, 10 vorgesehen sein, der noch ein bequemes Verschieben der Montageeinheit in der Tragschiene 13 gegen die Kraft des Gummiteils 9 zuläßt, wobei das gummielastische Teil 9 erst zu etwa 20-30% verformt ist, oder es kann vorgesehen sein, daß nach der Druckentspannung die Montageeinheit den beabsichtigten Festsitz unter größerer Verformung des gummielastischen Teils 9 bereits erzeugt. Im ersteren Falle kann durch Weiterdrehen der Rohrschelle 1 im Uhrzeigersinn, wobei sich der Gewindebolzen 6 durch die Schiebemutter 11 dreht, ein gewünschter Festsitz erreichen oder es erfolgt ein Nachziehen mit der Spannmutter 7a. In beiden Fällen bleibt eine gewisse schall- und vibrationsdämpfende Verbindung aufgrund des zwischengelegten Gummiteils 9 erhalten. Das ringartige Gummiteil 9 kann beispielsweise zur Erhöhung der Elastizität ein- oder beiderseits Noppen oder ähnlich geeignete Ausbildungen tragen.

Alle Bauteile der Verankerungseinheit mit Ausnahme des Gummiteils 9 sind Normteile, weshalb sich die Montageeinheit preiswert fertigen läßt.

Die gesamte Montageeinheit läßt sich durch Drehen an der Rohrschelle 4 bzw. an der Spannmutter 7a jederzeit lösen.

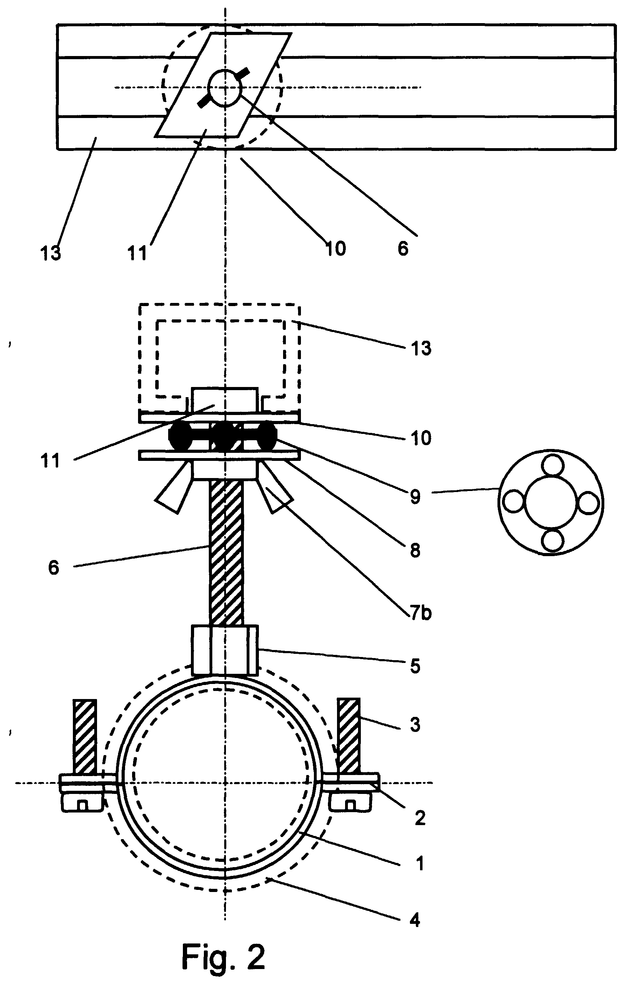

Die Ausführung nach Fig. 2 gleicht im wesentlichen der Ausführung nach Fig. 1, weshalb auf vorstehende Ausführungen verwiesen wird. Allerdings ist der Festsetzvorgang in der Tragschiene 13 (gleiche Teile sind analog zu Fig. 1 bezeichnet) ein anderer. Anstelle der Spannmutter 7a nach Fig. 1 ist eine in vorteilhafter Weise von Hand bedienbare Flügelmutter 7b als Spannelement vorgesehen. Außerdem ist die Schiebemutter 11 absolut drehfest mit dem Gewindebolzen 6 verbunden, beispielsweise verstemmt.

Für das zu befestigende Teil, im Beispiel eine Rohrschelle 1, ist in die angeschweißte Befestigungsmutter 5 ein Gewindebolzen 6 unlösbar eingebracht. Die Flügelmutter 7b befestigt nach oben zwei Unterlegscheiben 8 und 10, zwischen denen ein gummielastisches Teil 9 angeordnet ist. Beim Befestigen in der C-förmigen Tragschiene 13 wird die rautenförmige Schiebemutter 11 mit dem unlösbaren Gewindebolzen 6 in den etwas schmäleren Schlitz in der Tragschiene 13 eingelegt. Durch den Anpreßdruck wird das speziell genoppte gummielastische Teil 9 zusammengedrückt. Eine Vierteldrehung der Montageeinheit nach rechts führt dazu, daß sich die Schiebemutter 11 mit dem unlösbaren Gewindebolzen 6 und der Rohrschelle 1 in der Schiene 13 positioniert.

Nachdem das schall- und vibrationsdämmende gummielastische Teil 9 erst zu 20-30% nach der ersten Vierteldrehung verformt ist, läßt sich die gesamte Montageeinheit bis zum entgültigen Befestigungspunkt auf der Tragschiene 13 verschieben. Durch Drehen der Flügelmutter 7b kann die gesamte Montageeinheit in einem Zuge in der endgültigen Position befestigt werden. Es soll erwähnt sein, daß anstelle der Flügelmutter 7b unter Verzicht auf eine werkzeuglose Bedienung selbstverständlich auch eine gewöhnliche Spannmutter 7a verwendet werden kann. Jedoch ist dann der Komfort etwas geringer.

Die gesamte Montageeinheit wird durch Drehen der Flügelmutter 7b im Gegenuhrzeigersinn wieder gelöst.

Auch mit dieser Ausführung wird die Arbeitssicherheit erhöht, die Montagezeit verringert und ein wirksamer Schall- und Vibrationsschutz erreicht.

## Patentansprüche

1. Befestigungssystem für insbesondere Rohre oder dergleichen an einer Decke oder Wand mit einem Halter und einem Gewindebolzen, auf dessen freies Ende eine Schiebemutter aufdrehbar ist, die in eine C-förmige Tragschiene einführbar ist und mittels einer Spannmutter, einer Unterlegscheibe sowie einem federnden Element unter Vorspannung an der geschlitzten Wandung der Tragschiene festgelegt werden kann,
**gekennzeichnet durch**
folgende Merkmale:
a) Der Gewindebolzen (6) ist unlösbar mit dem Befestigungselement (1) verbunden,
b) auf das freie Ende des Gewindebolzens (6) sind nacheinander eine Spannmutter (7a/7b), eine erste Unterlegscheibe (8), ein federelastisches ringartiges Teil (9), eine zweite Unterlegscheibe (10), die Schiebemutter (11) und gegebenenfalls ein Gummiring (12) als Einheit vormontiert, wobei
c) die vorgenannten Bauteile (7a/7b, 8, 9, 10, 11) so zueinander distanziert sind, daß nach dem Einführen der Schiebemutter (11) in den Schlitz der C-förmigen Tragschiene (13) unter Druckbeaufschlagung in Richtung der Tragschiene (13) und unter anschließendem Verdrehen der Schiebemutter (11) um eine Vierteldrehung im Uhrzeigersinn durch Verdrehen der Montageeinheit (1 bis 11 bzw. 12) die gesamte Montageeinheit (1 bis 11 bzw. 12) in der Tragschiene (13) fixiert ist, wobei
d) erforderlichenfalls durch nachträgliche Verringerung des Spannabstandes (Unterlegscheibe 8, federelastisches ringartiges Teil 9, Unterlegscheibe 10) die Montageeinheit (1 bis 11 bzw. 12) unter Erhaltung einer federelastischen Befestigung unabhängig vom ausgeübten Spanndruck endgültig festlegbar ist.

2. Befestigungssystem nach Anspruch 1,
**dadurch gekennzeichnet**,
daß die Spannmutter (7) eine Maschinenmutter (7a) ist.

3. Befestigungssystem nach Anspruch 1,
**dadurch gekennzeichnet**,
daß die Spannmutter (7) eine Flügelmutter (7b) ist.

4. Befestigungssystem nach Anspruch 2,
**dadurch gekennzeichnet**,
daß die Schiebemutter (11) drehbeweglich auf dem Gewindebolzen (6) sitzt und von einem Gummiring (12) gehemmt wird.

5. Befestigungssystem nach Anspruch 3,
**dadurch gekennzeichnet**,
daß die Schiebemutter (11) drehfest auf dem Ende des Gewindebolzens (6) sitzt.

6. Befestigungssystem nach Anspruch 1,
**dadurch gekennzeichnet**,
daß das federelastische ringartige Teil (9) eine weichelastische Gummischeibe mit ein- oder zweiseitig angeformten Noppen ist.

7. Befestigungssystem nach einem der vorhergehenden Ansprüche,
**dadurch gekennzeichnet**,
daß das Befestigungselement (1) eine Rohrschelle ist.

8. Befestigungssystem nach Anspruch 1 oder 7,
**dadurch gekennzeichnet**,
daß der Gewindebolzen (6) unlösbar mit einer Mutter (5) des Befestigungselementes (1) verbunden ist.
